# EUROPEAN PATENT SPECIFICATION

(11) **EP 0 896 128 B1**
(45) Date of publication and mention of the grant of the patent: **26.05.2004**
(21) Application number: 98113105.5
(22) Date of filing: 14.07.1998
(51) Int. Cl.: F01D 11/00, F01D 9/04, F16J 15/08

(54) **Seal structure of gas turbine stationary blade shroud**
Dichtstreifen für Deckplatten von Gasturbinenleitschaufeln
Joint pour les plate-formes des aubes statoriques d'une turbine à gaz

(30) Priority: 06.08.1997 JP 21190297
(43) Date of publication of application: 10.02.1999
(73) Proprietor: Mitsubishi Heavy Industries, Ltd., Tokyo 100-0005 (JP)
(72) Inventor: Akagi, Koichi, Mitsubishi Heavy Industries Ltd., Takasago-shi, Hyogo-ken (JP)
(74) Representative: Henkel, Feiler & Hänzel

(56) References cited:
- GB-A- 2 303 888
- US-A- 4 452 462
- US-A- 5 058 906
- US-A- 5 158 430
- US-A- 5 624 227

## Description

### BACKGROUND OF THE INVENTION:

### Field of the Invention:

The present invention relates to a seal structure of gas turbine stationary blade shroud, and more specifically to a seal plate of improved shape which is able to enhance a sealing ability between mutually adjacent shrouds.

### Description of the Prior Art:

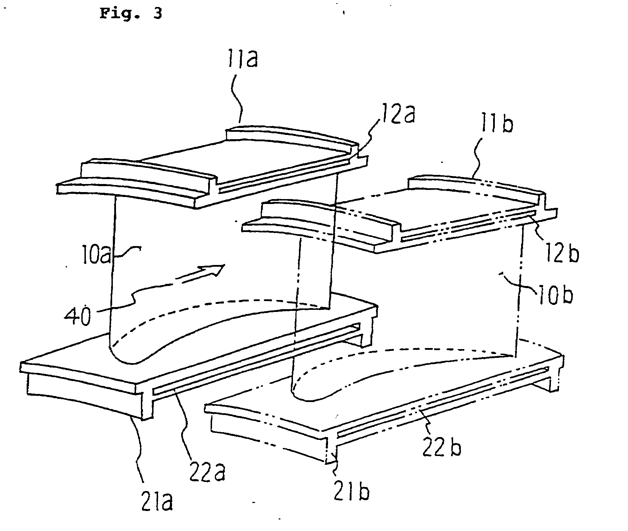

Fig. 3 is a perspective view showing general arrangement of stationary blades, outer shrouds and inner shrouds in a gas turbine. In the figure, numerals 10a and 10b designate stationary blades which are mutually adjacent in a turbine circumferential direction, numerals 11a and 11b designate outer shrouds which are mutually adjacent in the same circumferential direction and numerals 21a and 21b designate inner shrouds which are mutually adjacent in the same circumferential direction. Numeral 12a, 12b designates a groove provided in each of side faces along a turbine axial direction of the outer shroud 11a, 11b, respectively, and numeral 22a, 22b designates a groove provided in each of side faces along the same axial direction of the inner shroud 21a, 21b, respectively. Numeral 40 designates a gas flow passage of a high temperature combustion gas. In order to form and seal the gas flow passage 40 and a cooling air introducing passage leading to interiors of stationary blades 10a and 10b, there is provided a seal plate, to be described hereinafter, each between the grooves 12a and 12b of the mutually adjacent outer shrouds 11a and 11b, as described above, and between the grooves 22a and 22b of the likewise described inner shrouds 21a and 21b. The seal plate is not shown in Fig. 3 for simplicity of illustration.

In the gas turbine stationary blades constructed as shown in Fig. 3, one stationary blade 10a and its outer shroud 11a and inner shroud 21a together with adjacent one stationary blade 10b and its outer shroud 11b and inner shroud 21b provide the gas flow passage 40 formed therebetween.

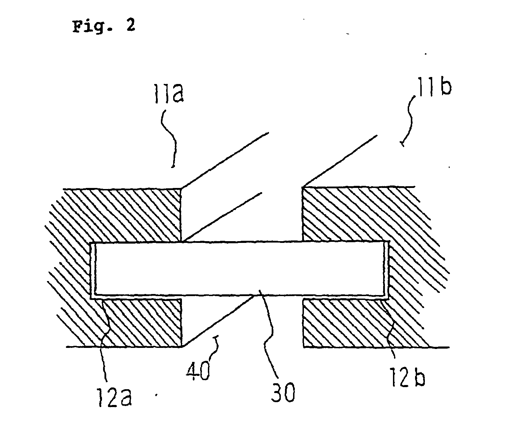

Fig. 2 is a perspective view of a prior art seal structure using said seal plate of gas turbine stationary blade shroud and, as shown there, there is provided the groove 12a, 12b in each of the mutually opposing side faces along the turbine axial direction of the mutually adjacent outer shrouds 11a and 11b and the seal plate 30 of thin plate shape is disposed with its each end portion being inserted into the groove 12a, 12b, so that the gas flow passage 40 and the cooling air introducing passage on an outer side of the outer shrouds 11a and 11b are partitioned and sealed between each other. It is to be noted that there is disposed also a seal plate of like shape between the grooves 22a and 22b of the inner shrouds 21a and 21b, as mentioned above, and air on an inner side of the inner shrouds 21a and 21b is prevented from flowing into the gas flow passage 40 as well as the high temperature combustion gas is prevented from flowing into the inner side of the inner shrouds 21a and 21b.

Cooling air, not shown in the figure, is introduced from the cooling air introducing passage on the outer side, that is, on a turbine casing side, of the outer shrouds 11a and 11b into cooling air passages provided in the interiors of the stationary blades 10a and 10b and, after having cooled the blades, is discharged into the gas flow passage 40. Also, sealing air is introduced from the outer shrouds 11a and 11b into the stationary blades 10a and 10b to be further supplied into cavities, not shown, in the inner shrouds 21a and 21b, so that the inner side of the inner shrouds is made in a higher pressure than that of the high temperature combustion gas so as to be sealed.

In the stationary blade shroud portion of gas turbine as mentioned above, there is formed the cooling air introducing passage. But, because the pressure of the cooling air is higher than that of the main gas and also the sizes of the inner shrouds and the outer shrouds are comparatively large, there occurs thermal deformation in the inner shrouds and the outer shrouds due to thermal gradient therein while in operation. Thus, at the portion where the seal plate 30 is inserted into the groove 12a, 12b, there occurs thermal deformation to cause a gap and no little portion of the cooling air does not flow into the stationary blade 10a, 10b but leaks into the main gas flow passage side.

Further, when the seal plate is to be assembled into the shrouds, because the space between the mutually adjacent side faces of the shrouds is narrow, it is considerably difficult to insert the seal plate, which is rigid, into the grooves in both of the side faces.

Other prior art seals are disclosed in US 5 158 430 and GB 2 303 888 A. US 5 158 430 discloses a "dog bone" shaped seal and a "C" shaped seal. GB 2 303 888 A discloses a sealing plate having a central strip and two "U" or "C" shaped end portions.

### SUMMARY OF THE INVENTION:

In order to dissolve said problems in the prior art, it is an object of the present invention to provide an improved seal structure of gas turbine stationary blade shroud in which a seal plate is given a spring effect to be flexible against thermal deformation of a groove of shroud into which the seal plate is inserted, to thereby enhance a sealing ability and also the seal plate can be easily assembled into the groove of shroud.

For attaining said object, the present invention provides a gas turbine seal structure having the features of claim 1.

In the seal structure according to the present invention, the seal plate has a bent portion at its each end portion, said bent portion being bent in a semi-circle, for example, and having a width of bent shape in the turbine radial direction which is slightly larger than a width of the groove provided in each of the side faces of the shrouds. By inserting such bent portion into the groove, there is caused no gap between the groove and the seal plate by the spring effect at the end portions of the seal plate and sealing ability can be enhanced.

Also, the seal plate is made thinner than the prior art seal plate and both end portions thereof have spring effect, thereby even if there occurs a thermal deformation of the groove, the seal plate can respond flexibly to that deformation so as not to cause a gap and there acts no unreasonable force due to rigidity of the sealing portion.

In the seal structure according to a further embodiment of the present invention, the bent portion of the seal plate has such a limited bent end portion as only to be inserted into the groove, thereby work of the seal plate becomes facilitated.

Further, because the space between the mutually opposing side faces of the stationary blade outer or inner shrouds is narrow, while it has been considerably difficult and taken much time to insert the rigid seal plate into the groove in the prior art, according to the seal structure of the present invention, the bent portion of the seal plate can be deformed so as to be easily inserted into the groove, hence assembling work of the seal plate into the sealing portion becomes much facilitated.

### BRIEF DESCRIPTION OF THE DRAWINGS:

Fig. 1 is a view showing a seal structure of gas turbine stationary blade shroud of one embodiment according to the present invention, wherein Fig. 1(a) is a perspective view, Fig. 1(b) is a view showing one example of shape of seal plate bent portion and Fig. 1(c) is a view showing another example of shape of seal plate bent portion.
Fig. 2 is a perspective view of a prior art seal structure of gas turbine stationary blade shroud.
Fig. 3 is a perspective view showing general arrangement of stationary blades, outer shrouds and inner shrouds in a gas turbine.

### DESCRIPTION OF THE PREFERRED EMBODIMENTS:

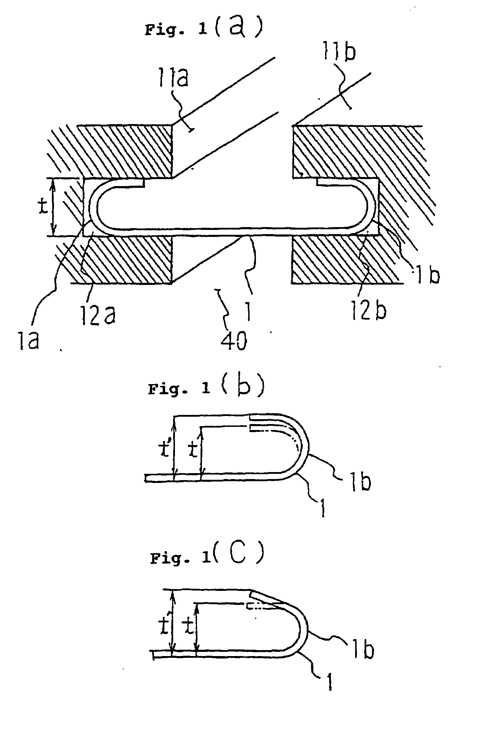

An embodiment according to the present invention will be described concretely below with reference to the figure. Fig. 1 is a view showing a seal structure of gas turbine stationary blade shroud of one embodiment according to the present invention, wherein Fig. 1(a) is a perspective view, Fig. 1(b) is a view showing one example of shape of seal plate bent portion and Fig. 1(c) is a view showing another example of shape of seal plate bent portion. In Fig. 1(a), numerals 11a and 11b designate mutually adjacent outer shrouds and a groove 12a, 12b is provided in each of both side faces along a turbine axial direction of the outer shrouds 11a and 11b, respectively. In Fig. 1(a), these parts are shown using same numerals as those in the prior art example of Fig. 2.

Width of the groove 12a, 12b in a turbine radial direction is shown by t and a seal plate 1 is disposed with its each bent portion 1a, 1b being inserted into the groove 12a, 12b, respectively. The seal plate 1 is made of a plate which is thinner than the prior art seal plate 30 and its each end portion is worked to form the bent portion 1a, 1b, which is given a flexibility by a spring effect and is inserted into the groove 12a, 12b, respectively, to be fixed therein by the spring effect, as shown in Fig. 1(a).

The bent portion 1a, 1b of the seal plate 1 is worked so as to have a width t' in the turbine radial direction which is slightly larger than the groove width t and when the bent portion 1a, 1b is to be inserted into the groove 12a, 12b, it is pressed down so as to meet the groove width t for easy insertion and, once inserted, it is fixed in the groove 12a, 12b by restoring force of the spring effect.

Also, according to another embodiment of the seal plate as shown in Fig. 1(c), the bent portion 1a, 1b is worked so as to have an opening end portion width t' which is slightly larger than the groove width t, like the above-mentioned embodiment, and when the bent portion 1a, 1b is to be inserted into the groove 12a, 12b, it is likewise pressed down and inserted to be fixed in the groove 12a, 12b.

Further, the bent portion of the seal plate may have a length in the turbine circumferential direction which is smaller than a depth of the groove so that a bent end portion thereof may not protrude beyond a surface of the groove, as shown in Fig. 1(a). In this case, the bent portion of the seal plate has such a limited bent end portion as only to be inserted into the groove, thereby work of the seal plate becomes facilitated.

It is to be noted that the example of Fig. 1 has been described with respect to the example where the seal plate 1 is fitted to the outer shrouds 11a and 11b, but the seal plate 1 is also fitted in a groove 22a, 22b of inner shrouds 21a and 21b, respectively, and description therefor, being same as in Fig. 1, is omitted.

According to the seal structure as described above, the bent portion 1a, 1b of each end portion of the seal plate 1 is fitted in the groove 12a, 12b so as to function to give a spring effect in the groove, thereby occurs no gap between the seal plate 1 and an inner wall face of the groove 12a, 12b and sealing ability can be enhanced.

Also, the seal plate 1 can be made thinner than the prior art seal plate 30 and each end portion thereof is worked so as to have flexibility, thereby a flexible response to the thermal deformation of the groove can be attained by the spring effect and there acts no unreasonable force due to rigidity of the sealing portion.

Further, even in a narrow space between the mutually adjacent shrouds, the seal plate 1 can be easily inserted into the groove 12a, 12b, so that assembling of the sealing portion becomes much facilitated.

The invention is not limited to the particular construction and arrangement herein illustrated and described but embraces such modified forms thereof as come within the scope of the following claims.

## Claims

1. A gas turbine seal structure comprising:
a pair of stationary blade shrouds (11a,11b,21a,21b) disposed mutually adjacent to each other along a turbine circumferential direction, said blade shrouds (11a,11b,21a,21b) having opposing side faces extending along a turbine axial direction and defining opposing grooves (12a,12b,22a,22b);
a thin seal plate (1) having opposite end portions inserted into said grooves (12a,12b,22a,22b) provided in said blade shrouds (11a,11b,21a,21b), respectively,
wherein each of said end portions of said seal plate comprises an integral bent portion (1a,1b) having a width (t'), in a turbine radial direction, that is larger than the width (t) of said respective groove (12a,12b,22a,22b), and each of said bent portions (1a,1b) is flexibly deformable so as to permit insertion into said respective groove (12a,12b,22a,22b) and, once inserted, is fixed in said respective groove (12a,12b,22a,22b) due to a spring effect of said bent portion (1a,1b),
**characterized in that** said seal plate (1) has flat surface portions at said end portions and said flat surface portions make contact with opposing portions of inner wall surfaces of said grooves (12a,12b,22a,22b) via flat planes, respectively, so that no gap occurs between said flat surface portions of said seal plate (1) and the inner walls of said grooves (12a,12b,22a,22b), respectively.

2. A gas turbine seal structure as claimed in claim 1,
wherein each of said bent portions (1a,1b) has a length in the turbine circumferential direction which is smaller than a depth of said respective groove (12a,12b,22a,22b) so that said bent portions (1a,1b) are completely disposed within said respective grooves (12a,12b,22a,22b).

## Patentansprüche

1. Gasturbinen-Dichtungsstruktur mit:
einem Paar von Leitschaufel-Deckringen (11a,11b,21a,21b), die einander benachbart entlang einer Turbinenumfangsrichtung angeordnet sind, wobei die Schaufel-Deckringe (11a,11b,21a,21b) gegenüberliegende Seitenflächen aufweisen, die sich entlang einer Turbinenaxialrichtung erstrecken und gegenüberliegende Rillen bzw. Nuten (12a,12b,22a,22b) festlegen,
einer dünnen Dichtungsplatte (1) mit gegenüberliegenden Endabschnitten, die jeweils in die in den Schaufel-Deckringen (11a,11b,21a,21b) vorgesehenen Nuten bzw. Rillen (12a,12b,22a,22b) eingesetzt sind,
wobei jeder der Endabschnitte der Dichtungsplatte einen integralen Biegeabschnitt (1a,1b) mit einer Breite (t') in einer Turbinen-Radialrichtung umfasst, die größer ist als die Breite (t) der jeweiligen Rille bzw. Nut (12a,12b,22a,22b), und jeder der Biegeabschnitte (1a,1b) derart elastisch verformbar ist, dass er ein Einsetzen in die jeweilige Nut (12a,12b,22a,22b) gestattet, und, wenn er eingesetzt ist, in der jeweiligen Nut (12a,12b,22a,22b) infolge einer Federwirkung des Biegeabschnitts (1a,1b) befestigt ist,
**dadurch gekennzeichnet, dass** die Dichtungsplatte (1) flache Oberflächenabschnitte an den Endabschnitten aufweist, und die flachen Oberflächenabschnitte jeweils mit gegenüberliegenden Abschnitten von Innenwandflächen der Nuten bzw. Rillen (12a,12b,22a,22b) über flache Ebenen in Kontakt stehen, so dass kein Zwischenraum zwischen den flachen Oberflächenabschnitten der Dichtungsplatte (1) und den jeweiligen Innenwänden der Nuten bzw. Rillen (12a,12b,22a,22b) vorhanden ist.

2. Gasturbinen-Dichtungsstruktur nach Anspruch 1, wobei jeder der Biegeabschnitte (1a,1b) eine Länge in der Turbinenumfangsrichtung aufweist, die kleiner ist als eine Tiefe der jeweiligen Nut (12a,12b,22a,22b), so dass die Biegeabschnitte (1a,1b) vollständig in den jeweiligen Nuten bzw. Rillen (12a,12b,22a,22b) angeordnet sind.

## Revendications

1. Structure d'étanchéité pour une turbine à gaz comprenant :
une paire d'anneaux (11a 11b, 21a, 21b) de renforcement d'aubes directrices disposés mutuellement à proximité l'un de l'autre suivant une direction circonférentielle de la turbine, les anneaux (11a, 11b, 21a, 21b) de renforcement d'aubes ayant des faces latérales opposées s'étendant le long d'une direction axiale de turbine et définissant des gorges (12a, 12b, 22a, 22b) opposées ;
une mince plaque (1) d'étanchéité, ayant des parties d'extrémité opposées insérées dans les gorges (12a, 12b, 22a, 22b) prévues dans les anneaux (11a, 11b, 21a, 21b) de renforcement d'aubes, respectivement ;
chacune des parties d'extrémité de la plaque d'étanchéité comprenant une partie (1a, 1b) courbée d'un seul tenant ayant une largeur (t'), dans une direction radiale de la turbine, qui est plus grande que la largeur (t) de la gorge (12a, 12b, 22a, 22b) et chacune des parties (1a, 1b) courbées pouvant être déformée en flexion de façon à permettre une insertion dans la gorge (12a, 12b, 22a, 22b) respective et, une fois insérée, étant fixée dans la gorge (12a, 12b, 22a, 22b) respective en raison d'un effet de ressort de la partie (1a, 1b) courbée,
**caractérisée en ce que** la plaque (1) d'étanchéité a des parties de surface plates aux parties d'extrémité et les parties de surface plates viennent en contact avec des parties opposées de surface de paroi intérieure des gorges (12a, 12b, 22a, 22b) par l'intermédiaire de plans plats, respectivement, de sorte qu'il ne se produit pas d'intervalle entre les parties de surface plates de la plaque (1) d'étanchéité et les parois intérieures des gorges (12a, 12b, 22a, 22b), respectivement.

2. Structure d'étanchéité pour une turbine à gaz suivant la revendication 1, dans laquelle chaque partie (1a, 1b) courbée a une longueur dans la direction circonférentielle de la turbine qui est plus petite qu'une profondeur de la gorge (12a, 12b, 22a, 22b) respective, de sorte que les parties (1a, 1b) courbées sont disposées complètement dans les gorges (12a, 12b, 22a, 22b) respectives.
